# EUROPEAN PATENT APPLICATION

(11) **EP 4 664 366 A1**
(43) Date of publication of application: **17.12.2025**
(21) Application number: 25181756.5
(22) Date of filing: 10.06.2025
(51) Int. Cl.: G06N 10/40, G06N 10/70

(54) **METHODS AND APPARATUSES FOR INTERCONNECT FACTORY FOR PHOTONIC INTERLINKS**

(30) Priority: 10.06.2024 US 202463658307 P; 17.09.2024 US 202463695745 P; 06.06.2025 US 202519231302
(71) Applicant: IonQ, Inc., College Park, MD 20740 (US); IonQ Quantum Canada, Inc., Toronto M4P 1E4 (CA)
(72) Inventor: KHAIT, Ilia, Toronto, M4P 1E4 (CA); AMINI, Jason Madjdi, College Park, 20740 (US); BOWLER, Ryan, College Park, 20740 (US)
(74) Representative: Nordmeyer, Philipp Werner

(57) **Abstract**

Aspects of the present disclosure relate generally to systems and methods for entangling a first set of interconnect qubits with a second set of interconnect qubits, entangling a first set of memory ions and the first set of interconnect qubits, collecting the first set of memory qubits into a parcel, distilling the parcel and one or more additional parcels into one or more distilled parcels, transferring the one or more distilled parcels to a computation system to execute one or more quantum algorithms using resource states in the distilled parcels, entangling, during the execution of the one or more quantum algorithms, a third set of interconnect qubits with a fourth set of interconnect qubits, and entangling, during the execution of the one or more quantum algorithms, a second set of memory ions with the third set of interconnect ions.

## Description

### CROSS-REFERENCE TO RELATED APPLICATIONS

The current application claims priority to, and the benefit of, United States Provisional Application Nos. 63/658,307 filed on June 10, 2024 and entitled "METHODS AND APPARATUSES FOR INTERCONNECT FACTORY FOR PHOTONIC INTERLINKS," and 63/695,745 filed on September 17, 2024 and entitled "METHODS AND APPARATUSES FOR INTERCONNECT FACTORY FOR PHOTONIC INTERLINKS," and United States Nonprovisional Application No. 19/231,302 filed on June 6, 2025 and entitled "METHODS AND APPARATUSES FOR INTERCONNECT FACTORY FOR PHOTONIC INTERLINKS," the contents of which are hereby incorporated by reference in their entireties.

### TECHNICAL FIELD

Aspects of the present disclosure relate generally to systems and methods for use in the implementation and/or operation of quantum information processing (QIP) systems, and more particularly, to operations of multiple QIP systems.

### BACKGROUND

Trapped atoms are one of the leading implementations for quantum information processing or quantum computing. Atomic-based qubits may be used as quantum memories, as quantum gates in quantum computers and simulators, and may act as nodes for quantum communication networks. Qubits based on trapped atomic ions enjoy a rare combination of attributes. For example, qubits based on trapped atomic ions have very good coherence properties, may be prepared and measured with nearly 100% efficiency, and are readily entangled with each other by modulating their Coulomb interaction with suitable external control fields such as optical or microwave fields. These attributes make atomic-based qubits attractive for extended quantum operations such as quantum computations or quantum simulations.

It is therefore important to develop new techniques that improve the design, fabrication, implementation, and/or control of different QIP systems used as quantum computers or quantum simulators, and particularly for those QIP systems that handle operations based on atomic-based qubits.

### SUMMARY

The following presents a simplified summary of one or more aspects to provide a basic understanding of such aspects. This summary is not an extensive overview of all contemplated aspects and is intended to neither identify key or critical elements of all aspects nor delineate the scope of any or all aspects. Its sole purpose is to present some concepts of one or more aspects in a simplified form as a prelude to the more detailed description that is presented later.

Aspects of the present disclosure includes systems and methods for entangling a first set of interconnect qubits on a first QIP system with a second set of interconnect qubits on a second QIP system, where the second QIP system may be physically separated from or may be co-located with the first QIP system, entangling the first set of interconnect qubits and a first set of memory qubits, entangling the second set of interconnect qubits and a second set of memory qubits, collecting the first set of memory qubits into a first set of one or more qubit parcels, collecting the second set of memory qubits into a second set of one or more qubit parcels, distilling the resource states held in the first set of parcel or parcels on the first QIP system and the second set of parcel or parcels on the second QIP system, which process might include classical communication between the first and second QIP systems, to generate a first set of distilled parcels on the first QIP system and a second set of distilled parcels on the second QIP system, and executing one or more quantum algorithms or parts of a one or more quantum algorithms on the first QIP system using resource states in the first set of distilled parcel or parcels along with, optionally, other distilled or non-distilled parcels on the first QIP system and on the second QIP system using the second set of distilled parcel or parcels along with, optionally, other distilled or non-distilled parcels on the second QIP system. The above description of the aspect does not limit the aspect to only two QIP systems. One or more additional QIP systems may be involved in the optional distilled or non-distilled parcels in the execution of the algorithm or algorithm or the parts of the algorithm or algorithms.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

The qubits in this disclosure are described as being atomic ions with physical transport of ions between functional units in the QIP system and heralded entanglement between the QIP systems. This is not meant to limit the aspects to only atomic ions, physical transport, or heralded entanglement. The qubits may be atomic ions, neutral atoms, superconducting qubits, or other qubit technology. The physical transportation aspect for atomic ions may be replaced by other quantum information bussing techniques to route the qubits physically or via transfer of the quantum information, such as microwave transmission lines for superconducting qubits. The heralded entanglement may be replaced by physical transportation, microwave transmission lines, or other quantum information bussing techniques.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIGs. 1A and 1B illustrate an exemplary view of atomic ions in a linear crystal or chain, and non-linear configuration, respectively, in accordance with aspects of this disclosure.
FIG. 2 illustrates an example of a quantum information processing (QIP) system in accordance with aspects of this disclosure.
FIG. 3 illustrates an example of a computer device in accordance with aspects of this disclosure.
FIG. 4 illustrates an example of an interconnect factory in accordance with aspects of this disclosure.
FIG. 5 illustrates an example of hardware used in the interconnect system in accordance with aspects of this disclosure.
FIG. 6 illustrates an example of a first operational configuration of the interconnect system in accordance with aspects of this disclosure.
FIG. 7 illustrates an example of a second operational configuration of the interconnect system in accordance with aspects of this disclosure.
FIGS. 8A-D illustrate an example of a third operational configuration of the interconnect system in accordance with aspects of this disclosure.
FIGS. 9A-C illustrate an example of a fourth operational configuration of the interconnect system implemented on a quantum computer in accordance with aspects of this disclosure.
FIG. 10 illustrates a method of implementing an interconnect factory according to aspects of the present disclosure.

### DETAILED DESCRIPTION

The detailed description set forth below in connection with the appended drawings or figures is intended as a description of various configurations or implementations and is not intended to represent the only configurations or implementations in which the concepts described herein may be practiced. The detailed description includes specific details for the purpose of providing a thorough understanding of various concepts. However, it will be apparent to those skilled in the art that these concepts may be practiced without these specific details or with variations of these specific details. In some instances, well known components are shown in block diagram form, while some blocks may be representative of one or more well known components.

In some aspects, to facilitate large scale quantum computation, the distribution of quantum information between multiple quantum information processing (QIP) systems is required. Quantum information distribution between these nodes may consume entanglement in the form of resource states, e.g., Bell states. This resource may be costly because it is a single-use resource, and its preparation is non-deterministic and potentially slow compared to intra-QIP operations.

For fault-tolerant quantum computation, these resource states may need to be prepared on a continuous basis to support other algorithm runtimes so that these resource states are readily available. As an example, for operations between fault-tolerant logical qubits, a number of resource states on the order of the code distance may be required. Therefore, it may be beneficial to construct an independent system which would produce these in parallel to the computation.

In one aspect of the present disclosure, the QIP system may be partitioned into three functional parts: a communication functional region (or interconnect region), a memory functional region, and a computation functional region. Each of the functional regions may include structures, for example one or more radio frequency (RF) rails, configured to confine the qubits within the functional regions. The functional regions may be physically separated or may physically overlap. The functional regions may also share structural elements, may contain only independent structural elements, or a combination of shared structural elements and independent structural elements. Qubits, the associated resources, or a combination of the two may be transported between functional regions.

In the communication functional region, entanglement between pairs of qubits in the communication functional region with qubits in the communication function region on the same or different QIP system may create communication resources that are entangled between the one or more QIP systems. The resources may consist of the entangled quantum state shared between the qubits in the one or more QIP systems. The connectivity of the communication resources between the one or more QIP systems may be capable of dynamically changed to accommodate the resource requirements for the one or more QIP systems or may be fixed.

For the memory functional region, the memory qubits may be held with long term coherence (e.g., significantly longer than the computation duration). Entanglement from the communication resources may be swapped onto the memory qubits or into a different qubit manifold of the same qubits to create memory resources. This process of creating the memory resources may occur in the communication functional region, the memory functional region, or another region. The memory resources may be combined and distilled to refine the entangled quantum state between the one or more QIP systems. The memory resources may be held in the memory functional unit, combined with additional memory resources and further distilled, transported to the computation function region, or a combination of one or more of these including repeated distillation. Since distillation is a non-deterministic process, unsuccessful distillation artifacts (e.g., qubits) may be sent back to the communication functional region for reuse.

For the computation functional region, the memory resources are consumed to execute one or more quantum algorithms or parts of quantum algorithms. Once the resources are consumed, the component qubits may be returned to the memory functional region, to the communication functional region, or a combination of the two for reuse.

In an aspect of this disclosure, the communication functional region may use photonic interconnects between the one or more QIP systems to entangle two or more qubits. Each qubit involved in the photonic interconnect process may include its own light collection optic and light transmission fiber that leads to one input of an optical switch for each qubit. That optical switch may include fibers from multiple qubits from one or more QIP systems and the outputs of the switch may terminate into one or more Bell state analyzers (BSA). The switch may provide dynamic reconfiguration of the QIP system connectivity by changing the connections between pairs of input fibers, corresponding to pairs of qubits involved in the photonic interconnect process, to the Bell state analyzers.

In another aspect of this disclosure, qubits from the memory functional region may be physically shuttled along a shuttling structure to the communication functional region. Memory qubits may be removed from this conveyor structure to pair with communications qubits. Once the entanglement between the communications qubits across the one or more QIP systems has been heralded, indicating that a communications resource between those qubits has been created, a logical swap operation may be performed to transfer the entanglement onto the memory qubit to create a memory resource. The memory qubit that now carries the memory resource may be physically swapped with a new memory qubit from the shuttling structure, returning the memory resource to the shuttling structure for transport to the memory functional region.

In some aspects, the memory qubits that carry the memory resources may be independently shuttled from the communication functional region to the memory functional region and merged with other memory qubits until a parcel of memory qubits is filled. Once filled, the parcel may be shuttled to an interaction zone within the communication functional region. Operations may then be performed between qubits in the parcel or between multiple such memory qubit parcels, for example by temporarily merging the parcel pairs into a single chain, to distill the resource state of a subset of the qubits in the parcel or parcels. Successful distillation outcomes may be collected into one or more parcels and further distilled and the successful outcomes collected into one or more memory qubit parcels, repeating the distillation and collection as needed, and the final successfully distilled parcel or parcels may be shuttled to the compute functional region. Unsuccessful distillation qubits, parcel, or parcels may be returned to the shuttling structure feeding the communication functional region as individual memory qubits to be reused in the generation of memory resources.

In an aspect of the present disclosure, once the distilled parcels are in the compute functional region, algorithmic computations between the distilled parcels and/or parcels that have not been supplied by the communication functional region may begin. Once the computation is complete and the state measured, some or all parcels are split into individual ions and returned to the conveyor toward the communication functional region. Distilled parcels are then transferred from the memory functional region, having been continually prepared by the communication and memory functional regions during the Compute functional region computations, and the Compute functional region is ready for the next algorithmic computation.

In certain aspects, the memory qubits and communications qubits may be atomic ions of the same atomic species or may be atomic ions of different atomic species.

In some aspects of the present disclosure, each of the functional regions may have a separate chamber for supplying qubits independent of the other functional regions to ensure independent operation of each functional region. Specifically, this design permits parallel and independent operations of the three functional regions: communication, memory, and computation.

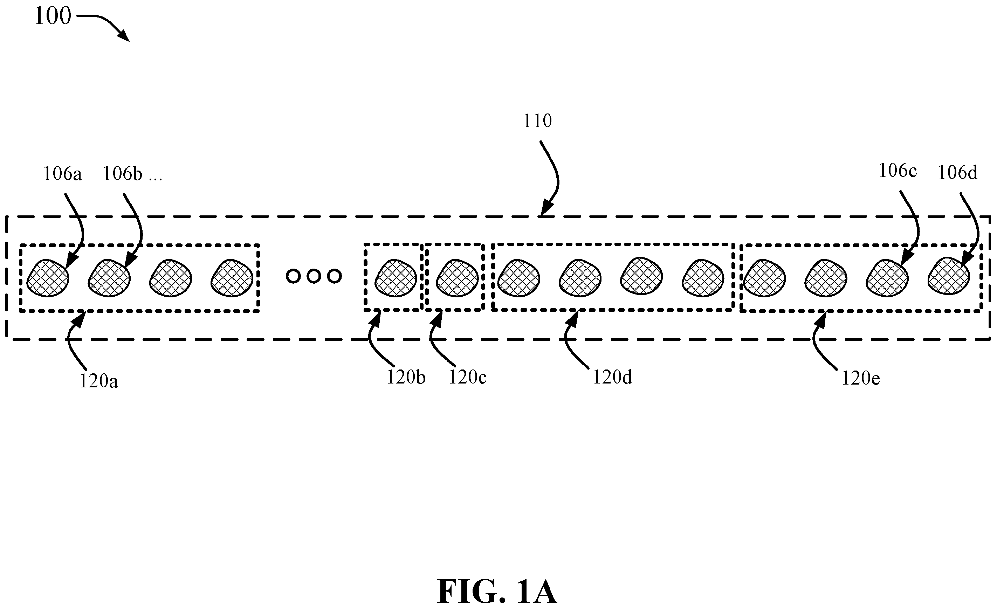

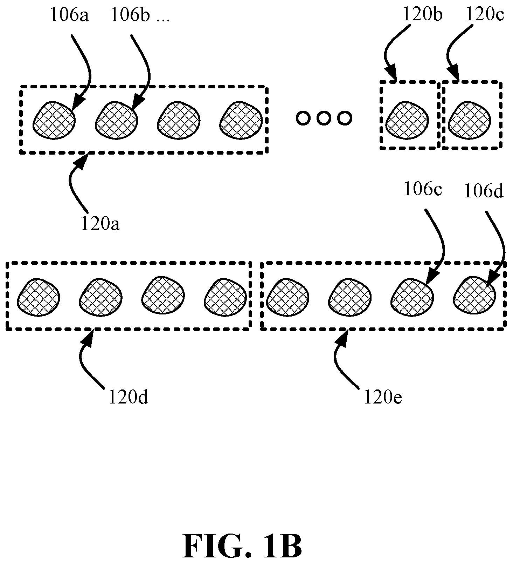

Solutions to the issues described above are explained in more detail in connection with FIGS. 1-10, with FIGS. 1-3 providing a general configuration of QIP systems or quantum computers, and more specifically, of atomic-based QIP systems or quantum computers.

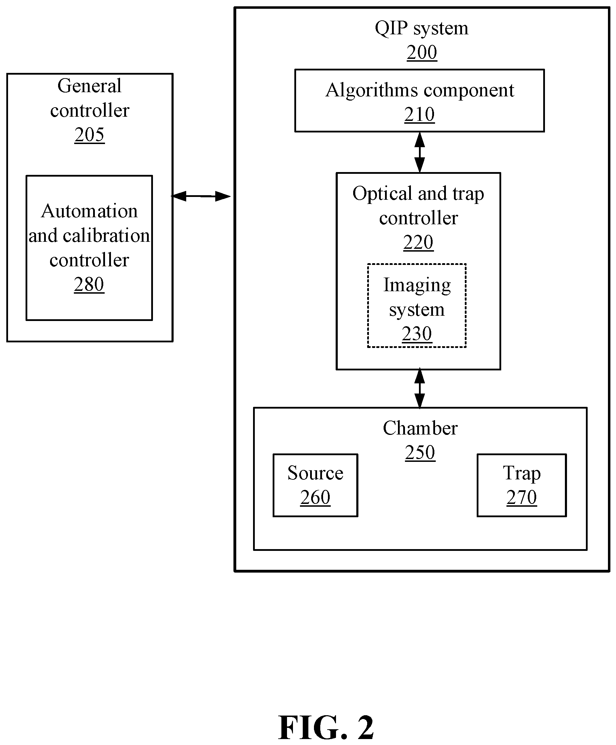

**FIG. 1A** illustrates a diagram 100 with multiple atomic ions 106 (e.g., atomic ions 106a, 106b, ..., 106c, and 106d) confined in a trap 110 (the trap can be inside a vacuum chamber as shown in FIG. 2). The trap may be referred to as an ion trap. The ion trap shown may be built or fabricated on a semiconductor substrate, a dielectric substrate, a glass die or wafer (also referred to as a glass substrate), or assembled from multiple components. The atomic ions may all be of the same species or may be a mixture of two or more species. The ions may be grouped into parcels 120 (e.g., parcels 120a, ..., 120b, 120c, 120d, and 120e) where each parcel may include one or more ions 106. Parcels 120 may be transported throughout the trap 110 as a unit, may be split into smaller parcels for transport through the trap 110, or may be combined with other parcels to make parcels 120 with larger numbers of ions.

In certain aspects of this disclosure, all of the ions 106 may be used as qubits, some of the ions 106 may be used as qubits while others may be used for other purposes such as sympathetic cooling of the qubits, or the ions 106 may be used at times as qubits and other times other purposed such as sympathetic cooling of qubits as needed.

For the following descriptions, all ions 106 are treated as qubits. This is not intended to limit the disclosure to this particular choice, but to only be representative of one choice of configuration from the ones described above.

In the example shown in FIG. 1A, the trap includes electrodes for trapping or confining multiple atomic ions into the chain 110 that are laser-cooled to be nearly at rest. The number of atomic ions (N) trapped can be configurable and more or fewer atomic ions may be trapped. The atomic ions can be Ytterbium ions (e.g., ¹⁷¹Yb⁺ ions), for example. The atomic ions are illuminated with laser (optical) radiation tuned to a resonance in ¹⁷¹Yb⁺ and the fluorescence of the atomic ions is imaged onto a camera or some other type of detection device. In this example, atomic ions may be separated by about 5 microns (µm) from each other, although the separation may be smaller or larger than 5 µm. The separation of the atomic ions is determined by a balance between the external confinement force and Coulomb repulsion and does not need to be uniform. The ions may be grouped into parcels 120 and these parcels 120 may be rearranged as needed. The spacing between parcels may be separated by about 100 microns (µm) from each other, although separation may be smaller or larger than 100 µm. Moreover, in addition to atomic Ytterbium ions, neutral atoms, Rydberg atoms, different atomic ions or different species of atomic ions may also be used. The trap may be a linear RF Paul trap, but other types of confinement (not necessarily linear, e.g., two-dimensional arrays) may also be used, including optical confinement. Thus, a confinement device may be based on different techniques and may hold ions and/or neutral atoms, for example, with an ion trap being one example of such a confinement device. The ion trap may be a surface trap, for example.

While the example above shows atomic ions disposed in a linear configuration, aspects of the present disclosure include trapping atomic ions in various 2-dimensional or 3-dimensional configurations.

FIG. 1B illustrates an example of multiple atomic ions 106 (e.g., atomic ions 106a, 106b, ..., 106c, and 106d) and parcels 120 (e.g., parcels 120a, ... 120b, 120c, 120d, 120e) arranged in a 2-dimensional or 3-dimensional configuration or distributed across multiple individual trapping devices. In one example, the multiple atomic ions 106 and parcels 120 shown in FIG. 1B may be physically placed into two or more parallel 1-dimensional traps that permits ions 106 and parcels 120 to jump between the two 1-dimensional traps. In another example, the multiple atomic ions 106 and parcels 120 shown in FIG. 1B may be physically placed into two separate ion traps on physically separate devices. The configuration may be realized with an inter-device transport scheme (e.g., where an ion moves from one trap device to another and there is a physical gap between the two) and/or elongated traps with ionic links between them. Other configurations for the atomic ions 106 and parcels 120 may also be implemented according to aspects of the present disclosure. In a scheme with inter-device transport, ions may physically move from one trap device to another trap device over a physical gap between the two devices.

**FIG.** 2 is a block diagram that illustrates an example of a QIP system 200 in accordance with various aspects of this disclosure. The QIP system 200 may also be referred to as a quantum computing system, a quantum computer, a computer device, a trapped ion system, or the like. The QIP system 200 may be part of a hybrid computing system in which the QIP system 200 is used to perform quantum computations and operations and the hybrid computing system also includes a classical computer to perform classical computations and operations.

Shown in FIG. 2 is a general controller 205 configured to perform various control operations of the QIP system 200. Instructions for the control operations may be stored in memory (not shown) in the general controller 205 and may be updated over time through a communications interface (not shown). Although the general controller 205 is shown separate from the QIP system 200, the general controller 205 may be integrated with or be part of the QIP system 200. The general controller 205 may include an automation and calibration controller 280 configured to perform various calibration, testing, and automation operations associated with the QIP system 200.

The QIP system 200 may include an algorithms component 210 that may operate with other parts of the QIP system 200 to perform quantum algorithms or quantum operations, including a stack or sequence of combinations of single qubit operations and/or multi-qubit operations (e.g., two-qubit operations) as well as extended quantum computations. As such, the algorithms component 210 may provide instructions to various components of the QIP system 200 (e.g., to the optical and trap controller 220) to enable the implementation of the quantum algorithms or quantum operations. The algorithms component 210 may receive information resulting from the implementation of the quantum algorithms or quantum operations and may process the information and/or transfer the information to another component of the QIP system 200 or to another device for further processing.

The QIP system 200 may include an optical and trap controller 220 that controls various aspects of a trap 270 in a chamber 250, including the generation of signals to control the trap 270, and controls the operation of lasers and optical systems that provide optical beams that interact with the atoms or ions in the trap. When used to confine or trap ions, the trap 270 may be referred to as an ion trap. The trap 270, however, may also be used to trap neutral atoms, Rydberg atoms, different atomic ions or different species of atomic ions. The lasers and optical systems can be at least partially located in the optical and trap controller 220 and/or in the chamber 250. For example, optical systems within the chamber 250 may refer to optical components or optical assemblies.

The QIP system 200 may include an imaging system 230. The imaging system 230 may include a high-resolution imager (e.g., CCD camera) or other type of detection device (e.g., photomultiplier tube or PMT) for monitoring the atomic ions while they are being provided to the trap 270 and/or after they have been provided to the trap 270. In an aspect, the imaging system 230 can be implemented separate from the optical and trap controller 220, however, the use of fluorescence to detect, identify, and label atomic ions using image processing algorithms may need to be coordinated with the optical and trap controller 220.

In addition to the components described above, the QIP system 200 can include a source 260 that provides atomic species (e.g., a plume or flux of neutral atoms) to the chamber 250 having the trap 270. When atomic ions are the basis of the quantum operations, that trap 270 confines the atomic species once ionized (e.g., photoionized). The trap 270 may be part of a processor or processing portion of the QIP system 200. That is, the trap 270 may be considered at the core of the processing operations of the QIP system 200 since it holds the atomic-based qubits that are used to perform the quantum operations or simulations. At least a portion of the source 260 may be implemented separate from the chamber 250.

It is to be understood that the various components of the QIP system 200 described in FIG. 2 are described at a high-level for ease of understanding. Such components may include one or more sub-components, the details of which may be provided below as needed to better understand certain aspects of this disclosure.

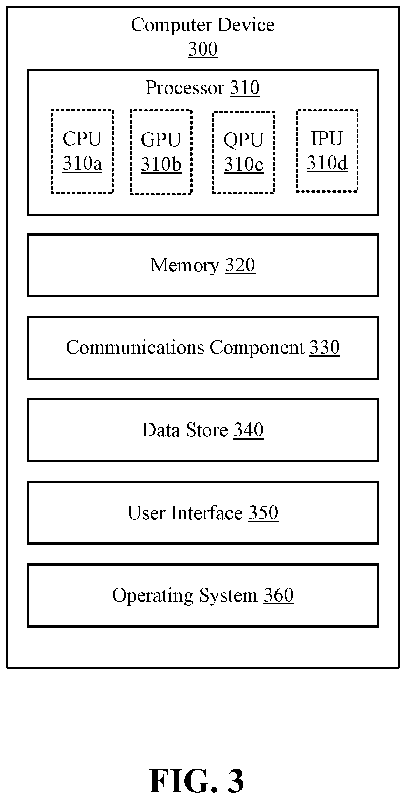

Referring now to **FIG. 3****,** illustrated is an example of a computer system or device 300 in accordance with aspects of the disclosure. The computer device 300 can represent a single computing device, multiple computing devices, or a distributed computing system, for example. The computer device 300 may be configured as a quantum computer (e.g., a QIP system), a classical computer, or to perform a combination of quantum and classical computing functions, sometimes referred to as hybrid functions or operations. For example, the computer device 300 may be used to process information using quantum algorithms, classical computer data processing operations, or a combination of both. In some instances, results from one set of operations (e.g., quantum algorithms) are shared with another set of operations (e.g., classical computer data processing). A generic example of the computer device 300 implemented as a QIP system capable of performing quantum computations and simulations is, for example, the QIP system 200 shown in FIG. 2.

The computer device 300 may include a processor 310 for carrying out processing functions associated with one or more of the features described herein. The processor 310 may include a single or multiple set of processors or multi-core processors. Moreover, the processor 310 may be implemented as an integrated processing system and/or a distributed processing system. The processor 310 may include one or more central processing units (CPUs) 310a, one or more graphics processing units (GPUs) 310b, one or more quantum processing units (QPUs) 310c, one or more intelligence processing units (IPUs) 310d (e.g., artificial intelligence or AI processors), or a combination of some or all those types of processors. In one aspect, the processor 310 may refer to a general processor of the computer device 300, which may also include additional processors 310 to perform more specific functions (e.g., including functions to control the operation of the computer device 300).

The computer device 300 may include a memory 320 for storing instructions executable by the processor 310 to carry out operations. The memory 320 may also store data for processing by the processor 310 and/or data resulting from processing by the processor 310. In an implementation, for example, the memory 320 may correspond to a computer-readable storage medium that stores code or instructions to perform one or more functions or operations. Just like the processor 310, the memory 320 may refer to a general memory of the computer device 300, which may also include additional memories 320 to store instructions and/or data for more specific functions.

It is to be understood that the processor 310 and the memory 320 may be used in connection with different operations including but not limited to computations, calculations, simulations, controls, calibrations, system management, and other operations of the computer device 300, including any methods or processes described herein.

Further, the computer device 300 may include a communications component 330 that provides for establishing and maintaining communications with one or more parties utilizing hardware, software, and services. The communications component 330 may also be used to carry communications between components on the computer device 300, as well as between the computer device 300 and external devices, such as devices located across a communications network and/or devices serially or locally connected to computer device 300. For example, the communications component 330 may include one or more buses, and may further include transmit chain components and receive chain components associated with a transmitter and receiver, respectively, operable for interfacing with external devices. The communications component 330 may be used to receive updated information for the operation or functionality of the computer device 300.

Additionally, the computer device 300 may include a data store 340, which can be any suitable combination of hardware and/or software, which provides for mass storage of information, databases, and programs employed in connection with the operation of the computer device 300 and/or any methods or processes described herein. For example, the data store 340 may be a data repository for operating system 360 (e.g., classical OS, or quantum OS, or both). In one implementation, the data store 340 may include the memory 320. In an implementation, the processor 310 may execute the operating system 360 and/or applications or programs, and the memory 320 or the data store 340 may store them.

The computer device 300 may also include a user interface component 350 configured to receive inputs from a user of the computer device 300 and further configured to generate outputs for presentation to the user or to provide to a different system (directly or indirectly). The user interface component 350 may include one or more input devices, including but not limited to a keyboard, a number pad, a mouse, a touch-sensitive display, a digitizer, a navigation key, a function key, a microphone, a voice recognition component, any other mechanism capable of receiving an input from a user, or any combination thereof. Further, the user interface component 350 may include one or more output devices, including but not limited to a display, a speaker, a haptic feedback mechanism, a printer, any other mechanism capable of presenting an output to a user, or any combination thereof. In an implementation, the user interface component 350 may transmit and/or receive messages corresponding to the operation of the operating system 360. When the computer device 300 is implemented as part of a cloud-based infrastructure solution, the user interface component 350 may be used to allow a user of the cloud-based infrastructure solution to remotely interact with the computer device 300.

In connection with the systems described in FIGS. 1-3, aspects of the present disclosure include an interconnect system configured to entangle a plurality QPUs disposed remotely from one another across one or more QIP systems. The systems described in FIGS. 2-3 may be used to control various aspects of the interconnect system as described below.

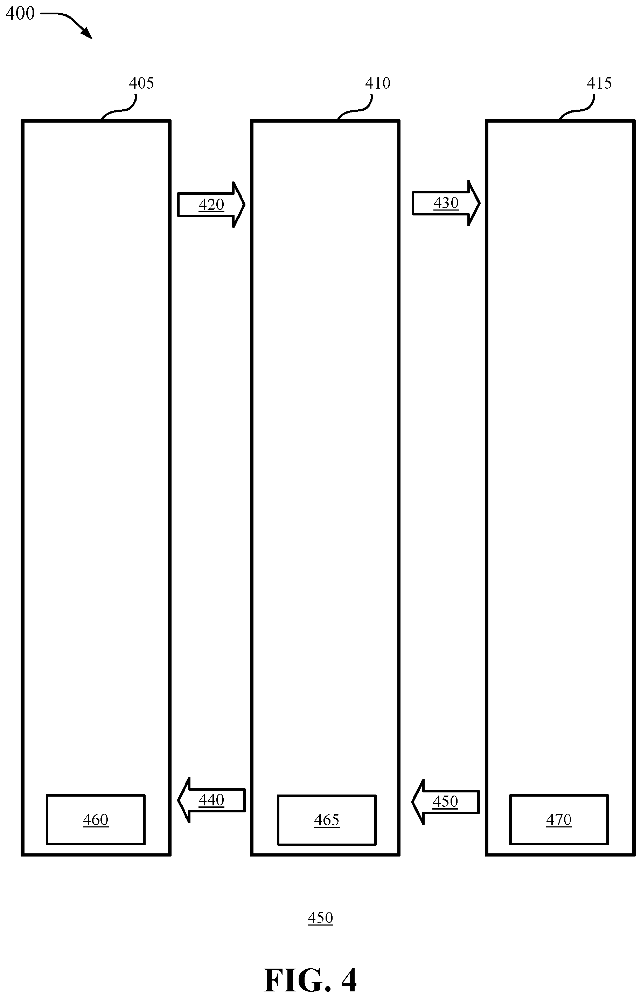

**FIG. 4** illustrates an example of an interconnect system 400 for implementing an interconnect factory for photonic interlinks. In some aspects, the interconnect system 400 may include a communication functional region 405 configured to generate resource states. The communication functional region 405 may be configured to communicate with one or more other communication functional regions across one or more QIP systems with or without a switch (not shown). The interconnect system 400 may include a memory functional region 410 configured to provide qubits to entangle with communications resources from the communication functional region 405 to create memory resources. The memory system may be configured to provide qubits or parcels associated with distilled memory resource states to the computation functional region 415 as described below. The interconnect system 400 may include the computation functional region 415 configured perform computation using these memory resource states.

In some aspects of the present disclosure, each of the communication functional region 405, the memory functional region 410, and/or the computation functional region 415 may be implemented using one or more of the multiple atomic ions 106, the QIP system 200, and/or the computer device 300. For example, the computer device 300 may control the QIP system 200 to perform the functions of moving, entangling, and/or transferring one or more of the multiple atomic ions 106, parcels 120, or both ions 106 and parcels 120.

In some aspects of the present disclosure, the communication functional region 405 may contain qubits and/or parcels associated with one or more communication resources 460, the memory functional region 410 may contain qubits and/or parcels associated with memory resources 465, and the computation functional region 415 may contain qubits and/or parcels associated with computation resources 470.

In one aspect of the present disclosure, the memory functional region 410 may provide one or more qubits or parcels to the communication functional region 405 via the transport bus 440 to be entangled with the qubits associated with the communications resources 460 to create memory resources. After the entanglement, the memory resources may be moved to the memory functional region via the transport bus 420 to be stored or to be distilled into other memory resources 410. Any "unused" qubits or parcels (e.g., qubits that were discarded during the distillation process) in the memory functional region 410 may be provided to the communication functional region 405 via the transport bus 440 to await entanglement into memory resources.

In certain aspects, the computation functional region 415 may provide one or more qubits or parcels to the memory functional region 410 via the transport bus 450 to be entangled with the qubits associated with the memory resources 465 to create resources similar to the description above.

In some aspects of the present disclosure, each of the communication functional region 405, the memory functional region 410, and the computation functional region 415 may have a separate loading chamber to implement independent operations.

In an exemplary aspect, the interconnect system 400 can be implemented as part of an ion trap, such as ion trap 270 as shown in FIG. 2 and described above. For example, the ion trap 270 may include the trapped ions used in the interconnect system 400. In some instances, one or more ion traps 270 may be used as one or more of the communication functional region 405, the memory functional region 410, and/or the computation functional region 415. In one implementation, the interconnect system 400 may include multiple ion traps 270 controlled by the QIP system 200 and/or the computer device 300. Semi-static potentials from the DC electrodes around the RF rails 505, 510, 515 may generate three dimensional confinement for the parcels. In other words, DC electrodes may be disposed around the ion traps 270 to confine the ions.

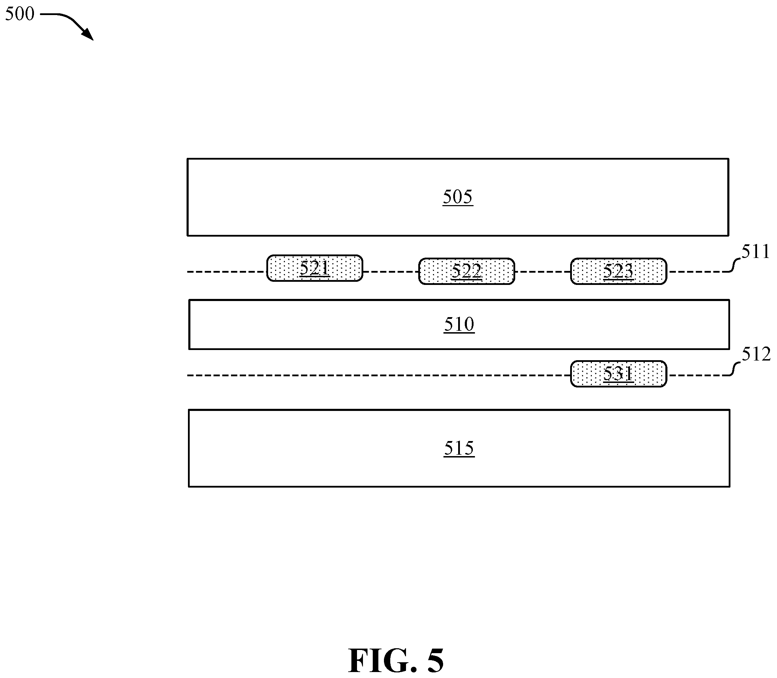

**FIG. 5** illustrates an example of hardware used in the interconnect system 400 according to aspects of the present disclosure and represents a 2-dimensional trapping structure. Referring to FIGS. 4 and 5, the interconnect system 400 may include a trap 500 that may consist of a first RF rail 505, a second RF rail 510, and a third RF rail 515, but may include only two rails or may include four or more rails in alternative aspects. The three RF rails 505, 510, and 515 generate 1-dimensional RF confinement tracks 511 and 512. Parcels (e.g., parcels 521, 522, 523, and 531) of one or more qubits each may be confined to regions along each of tracks 511 and 512. Parcels may be transported along each track and may jump between tracks. For example, parcel 521 may jump from track 511 to track 512. More or fewer rails may generate more or fewer tracks and modifications to the rail shape or rail shapes and orientation or orientations may generate localized tracks that do not extend the length of the device.

In an exemplary aspect, a single RF signal may be used for all three rails and the amplitude and frequency of that RF signal may be constant in time.

In other aspects, more than one RF signal may be used and the RF signal amplitude and/or frequency varied to facilitate the operations described in this disclosure.

In an aspect, DC signals applied to the DC electrodes (not shown) confine (alone or in combination with the RF signals from the RF rails 505, 510, 515) and/or move multiple parcels (groups of one or more ions) along the two RF tracks 511, 512. That is, a controller, such as general controller 205 and/or optical and trap controller 220 as described above, is configured to control the DC electrodes, to selectively apply the one or more potentials to perform one or more parcel manipulation operations on one or a plurality of parcels confined within two RF tracks 511, 512. While the examples in the FIG. 5 shows two RF tracks 511, 512, other numbers of RF tracks may also be used according to aspects of the present disclosure.

In one example, parcels 521 through 523 are shown to be confined to the RF track 511 and parcel 531 is shown to be confined to the RF track 512. When the DC signals are static, the DC electrodes create electric fields to confine the parcels in fixed positions in the RF tracks 511 and 512 as shown by the locations of parcels 521-531. Moreover, time varying DC signals, where the time variation is typically slow compared to the RF signals, applied to the DC electrodes allow for transport of one or more parcels along the RF tracks 511, 512 and/or between the RF tracks 511, 512. For example, some of the DC electrodes may create an attracting field while other ones of the DC electrodes may create a repelling field to move a parcel along a RF track or between the RF tracks 511, 512 while maintaining the parcel as a unit. Similarly, forces generated by the DC electrodes may merge two or more parcels into a single larger parcel or the forces generated may split one parcel into two or more smaller parcels.

According to an aspect, the parcel manipulation operations can be, but are not limited to, one or more of an ion parcel transportation, an ion parcel merging, an ion parcel separation, and/or an ion parcel jumping (e.g., a parcel jump operation). In an exemplary aspect, a parcel jump operation is the action of moving the parcel between two different RF tracks by moving the parcel away from the RF null of the first RF track and delivering the parcel to the RF null of the second RF track. A parcel shift operation (e.g., an ion parcel transportation) is the action of moving a parcel along the line or curve of an RF track. A parcel merge (e.g., an ion parcel merging) is the action of taking two or more parcels and merging them into a single, larger parcel. A parcel split (e.g., an ion parcel separation) is the action of taking one parcel and splitting it into two or more smaller parcels. Other operations may also be implemented according to aspects of the present disclosure.

In an aspect, the placement, shape, and distribution of the DC electrodes are chosen such that different regions along the RF tracks 511 and 512 are better suited to perform some operations than others. For example, the DC electrodes may be configured in a particular region of the RF tracks 511 and 512 to facilitate parcel jump operations in that region or to facilitate the precise control of the qubits in the parcel as needed for quantum operations.

Still referring to FIG. 5, while the parcels are being described as being confined, shifted, merged, or separated, the hardware in the interconnect system 400 may also be used to confine, shift, merge, and/or separate individual qubits according to aspects of the present disclosure.

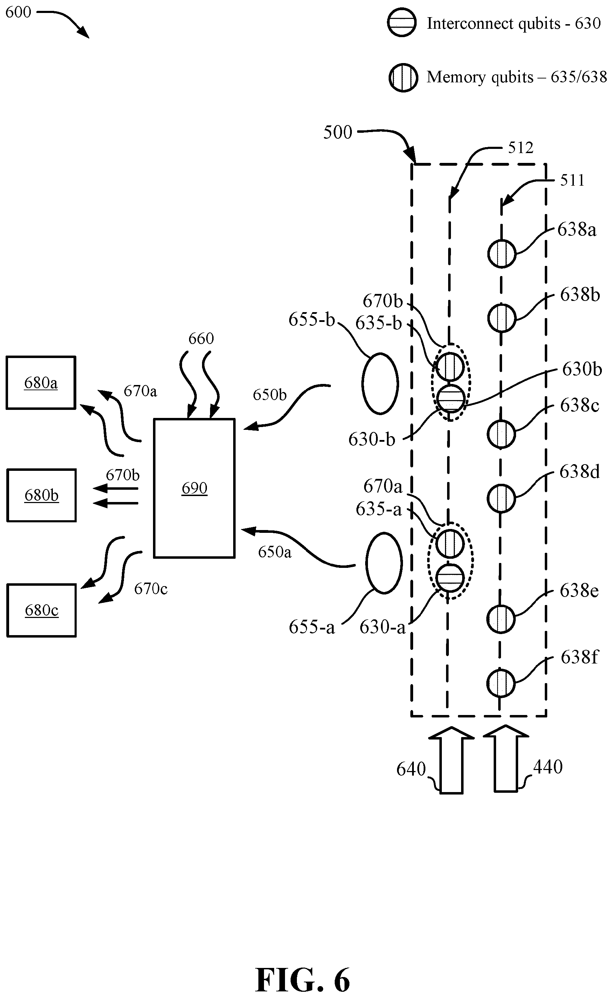

FIG. 6 illustrates an example of a first operational configuration of the interconnect system 400 (FIG. 4) according to aspects of the present disclosure. This example is not intended to limit this disclosure to a specific trapping architecture and serves only as a representative of one way of implementing the interconnect system 400. Referring to FIGS. 3-6, in the first operational configuration 600, the communication functional region 405 contain a trap 500 (FIG. 5) and may load interconnect qubits 630 into the RF track 511 via a transport bus 640. The memory functional region 410 may load memory qubits 635 onto a s RF track 511 via the transport bus 642.

In some aspects, each qubit of the interconnect qubits 630 may have its own collection optic 655 (e.g., collection optic 655a and 655b) and/or light transmission fiber 650 (e.g., fiber 650a and 650b) that leads to the optical switch 690. The optical switch 690 routes light from the light transmission fibers 650 and, optionally, one or more light transmission fibers from other QIP systems to the Bell state analyzer (BSA) light transmission fiber pairs 670 (e.g. 670a, 670b, ... 670c) that then terminate in the Bell state analyzers (BSA) 680 (e.g., BSAs 680a, 680b, ... 680c). While only one optical switch 690 is shown, this aspect may include one, two, or more than two optical switches that may or may not connect to each other, to the light transmission fibers 650, 660, and/or 670, or to a combination of optical switches 690 and light transmission fibers 650, 660, and/or 670. The collection optics 655, the light transmission fibers 650 and 660, the optical switch 690 and the BSAs 680 are only representative of one method to convert the interconnect qubits 630 into communication resources and does not preclude replacing or including other options for converting the interconnect qubits 630 into communications resources, for example via physical transport of the interconnect qubits 630 to merge with other interconnect qubits from the same or different QIP system and then to be entangled via gates based on state dependent forces.

The interconnect qubit or qubits 630 may be paired 670 (e.g., 670a and 670b) with memory qubits 635 that have been transferred from RF track 511, which serves as a memory qubit conveyer bring memory qubits from the memory functional region via transfer bus 440 and to the memory functional region via transfer bus 420. There may be additional memory qubits 638 (e.g., memory qubits 638a-f) remaining on RF track 511. When an interconnect qubit (e.g., interconnect qubit 630a) has been heralded as being a communication resource, a two qubit entangling gate may then transfers the communication resource from the interconnect qubit 630a into a memory resource carried by the paired memory qubit 635a. The memory qubit 635a, now a memory resource, may then be transferred back to the RF track 511, where the conveyer that is RF track 511, may transport the memory qubit 635a to the memory functional region. In this explanation, we use interconnect qubit 630a and memory qubit 635a, but this is for explanatory purposes only and this explanation applies to all interconnect qubits 630 (e.g., interconnect qubits 630a and 630b) and all paired memory qubits 635 (e.g., paired memory qubits 635a and 635b). This process of creating communications resources, transferring the communications resources to memory resources, and transport the memory resources to the memory functional region may occur individually, sequentially, in parallel, or a combination of these temporal sequencing options.

In another aspect of this disclosure, the pairs of interconnect qubits 630 and memory qubits 635 may be extended to three or more qubits as needed to implement the resource transfer and/or include ions for sympathetic cooling.

As discussed above, multiple interconnect qubits and memory qubits may entangle concurrently to increase the rate of information transfer from the interconnect qubits to the memory ions.

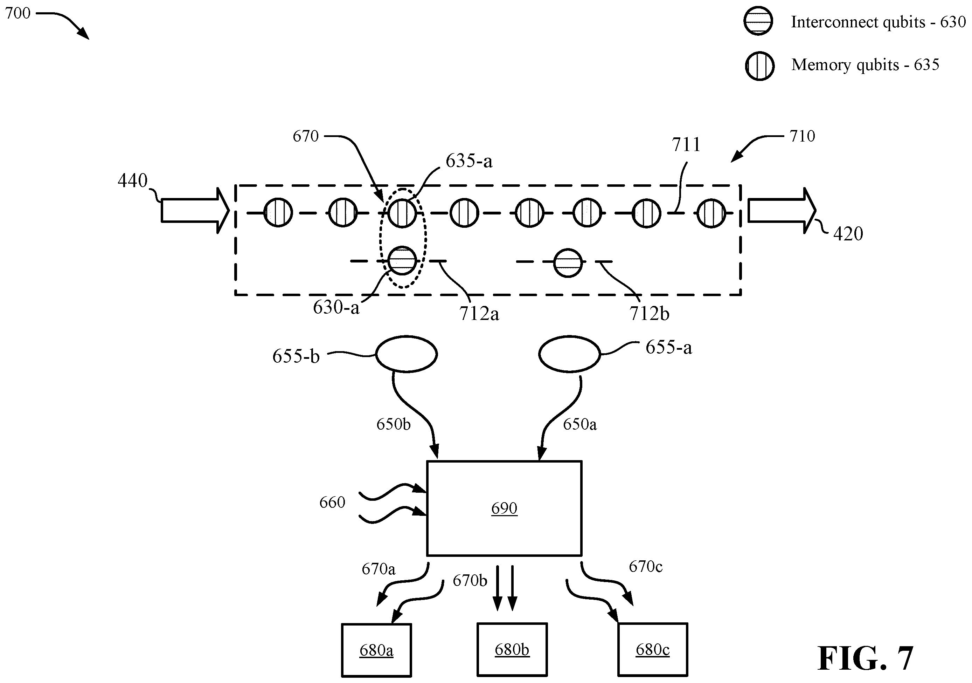

FIG. 7 illustrates an example of a second operational configuration 700 of the interconnect system 400 (FIG. 4) according to aspects of the present disclosure. Referring to FIGS. 3-7, in the second operational configuration 700, the communication function region 405 may include a trap 710 with two or more RF rails that generate a long RF track 711 that serves as a conveyor bus and local RF tracks 712 (e.g., local RF track 712a and 712b) that may be to the side of RF track 711, above RF track 711, below RF track 711, or a combination of these across the instances of the local tracks 712. The local RF tracks 712 may support one qubit, two qubits, or more than two qubits. The local RF tracks 712 may permit transport along the RF tracks 712, transport from/to other tracks 712, transport from/to track 711, or a combination of these. The transport bus 640 may load the interconnect qubits 630 onto the RF track 711 where they may be transferred to the local RF tracks 712 (e.g., local RF tracks 712a and/or 712b). The transport bus 440 may transport memory qubits 635 from the memory functional region 410 to track 711. During normal operations, interconnection qubits 630 may be entangled with other interconnect qubits to form communications resource via light collection optics 635, light transmission fibers 650 and 660, optical switch 690, and BSAs 680. Once the communications resource is formed (e.g., carried by an interconnect qubit 630a), interconnect qubit 630a is paired 670 with a memory qubit 635a, and an entangling gate may transfer the communications resource from the interconnect qubit 630a to the memory qubit 635a to form a memory resource. The memory qubit 635a may then be transported along the RF track 711 to the transport bus 420 and transported to the memory functional region. In this explanation, we use interconnect qubit 630a and memory qubit 635a, but this is for explanatory purposes only and this explanation applies to all interconnect qubits 630 (e.g., interconnect qubits 630a and 630b) and all paired memory qubits 635 (e.g., paired memory qubits 635a and 635b). This process of creating communications resources, transferring the communications resources to memory resources, and transport the memory resources to the memory functional region may occur individually, sequentially, in parallel, or a combination of these temporal sequencing options.

As an aspect of the operational configuration 700 for the communication functional region 405, pair 670 may be configured such that the memory qubit 630a and the interconnect qubit 635a may remain on RF tracks 711 and 712a, respectively (as shown in FIG 7.), may transport the memory qubit 630a to RF track 712a so both qubits of pair 670 reside on RF track 712a, may transport the interconnect qubit 635a to RF track 711 so both qubits of pair 670 reside on track 711, or may swap the memory qubit 630a and the interconnect qubit 635a between the two RF tracks 711 and 712a. References to the specific memory qubit 630a and interconnect qubit 635a are for example purposes only and there may be one or more pairs 670 of memory qubits 630 and interconnect qubits 635.

In another aspect of operational configuration 700 for the communication functional region 405, the pairs of interconnect qubits 630 and memory qubits 635 may be extended to three or more qubits as needed to implement the resource transfer and/or include ions for sympathetic cooling.

In another aspect of operational configuration 700 for communication functional region 405, there may be only one local RF track 712, two local RF tracks 712 (e.g., 712a and 712b as shown in FIG. 7), or more than two local RF tracks 712.

As discussed above, multiple interconnect qubits and memory qubits may entangle concurrently to increase the rate of information transfer from the interconnect qubits to the memory qubits.

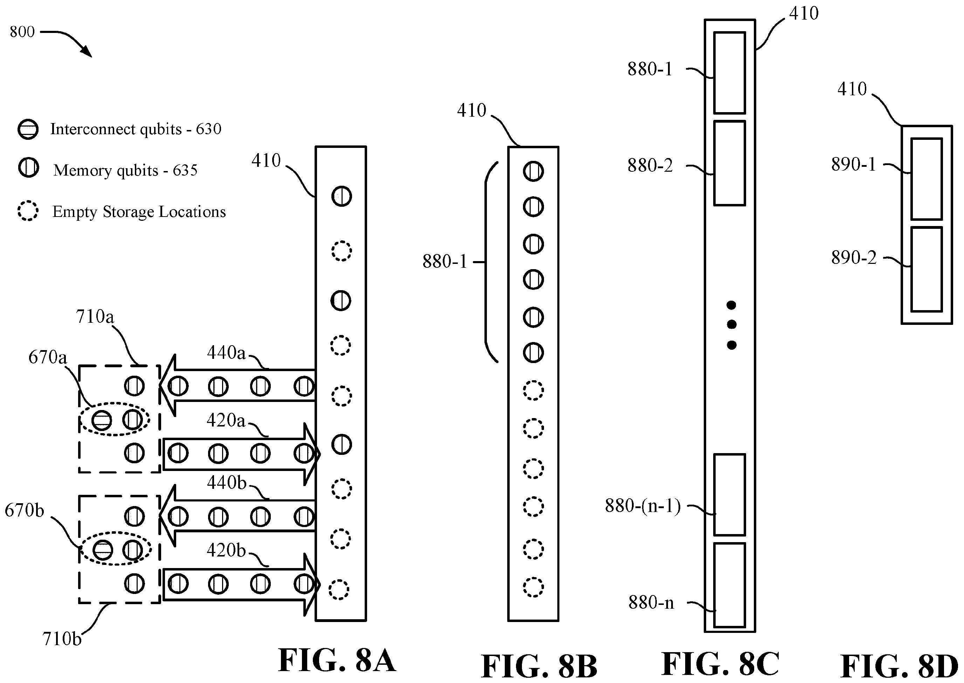

FIG. 8A illustrates an example of an operational configuration of the memory functional region 410 of the interconnect system 400 (FIG. 4) according to aspects of the present disclosure. Referring to FIGS. 3-5 and 7-8, one or more communication functional units (e.g., communication functional regions 710a and 710b) take memory qubits from the memory functional unit 410 via the transport buses 440 (e.g., transport buses 440a and 440b) and return memory resources carried by memory qubits to the memory functional unit 410 via the transport buses 420 (e.g., transport buses 420a and 420b) as according to aspects of the present disclosure.

Next, the memory qubits carrying the memory resources may be merged and collected into a parcel 880 (FIG. 8B). One or more parcels 880 (e.g., parcels 880-1 through 880-n where n is the number of parcels) of memory resource may be collected (FIG. 8C). One or more quantum operations may then be performed among the parcels 880-1, 880-2... 880-n to distill the resource states associated with the memory qubits 635 and thus refining the entangled quantum state between the one or more QIP systems. This may include classical communication and coordination between the one or more QIP systems. Successful distillation outcomes may be further distilled into on ore more parcels 890 (e.g., parcels 890-1 and 890-2 in Fig 8D), further refining the entangled quantum state between the one or more QIP states. This cascading distillation process may continue until the desired refinement is reached. Here, a distilled parcel refers to the result of the distillation process. The distilled parcels 880, the doubly distilled parcels 890, parcels distilled from 890, or a combination of these may be shuttled to the computation system 415 to be used in quantum algorithms as computational resources. The memory qubits from the unsuccessful distillation parcels may be returned to communication functional region 405 via the transport bus 440 to be reused in creating memory resources.

In some aspects, during the execution of the one or more quantum algorithms or parts of one or more quantum algorithms, a second set of parcels containing memory qubits may be prepared in the communication functional region collected from the communication functional region into the memory functional region, distilled in the memory functional region, or a combination of these. As such, the interconnect system 400 may be configured to prepare parcels of memory qubits for eventual transfer to the computation functional region while the computation functional region is executing one or more algorithms or parts of one or more algorithm on a prior set of parcels containing computational resources. This parallelization of resource creation by the communication functional region and the memory functional region while algorithmic computation is in progress in the computation functional region may reduce or eliminate the overhead for creating the computational resources.

In some aspects of the present disclosure, once the computation is complete and the resulting state(s) measured, some or all of the distilled parcel or parcels 890 may be split into individual qubits and returned to the memory functional region 410 via transport bus 450 (FIG. 4) to be reused.

In certain aspects of the present disclosure, one or more additional distilled parcels may be transferred from the memory functional region 410 to the computation functional region 415 while the computation function region 415 is executing the one or more algorithms or parts of one or more algorithms.

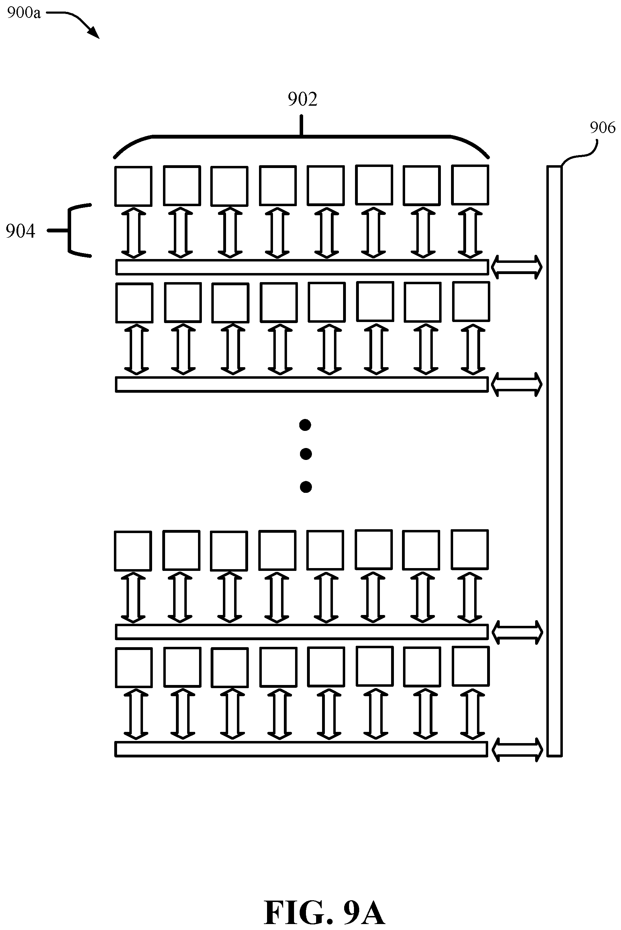

FIGS. 9A-C illustrate an example of a fourth operational configuration of the interconnect system implemented on a quantum computer in accordance with aspects of this disclosure. Referring to FIGS. 3-5 and 7-9C, one or more communication functional units (e.g., communication functional regions 415) is configured to obtain memory qubits from the memory functional unit via the ion transport buses and return memory resources carried by memory qubits to the memory functional unit via the ion transport buses as according to aspects of the present disclosure.

FIG. 9A illustrates an example of a distributed quantum computer for implementing remote entanglement according to aspects of the present disclosure. As shown in FIG. 9A, the distributed quantum computer 900a is a modular and distributed quantum system designed to scale quantum computing capabilities by connecting multiple quantum processors 902 (e.g., QPU modules) via optical (or photonic) communication links 904. Each QPU module can be managed by a network fabric 906 to create a modular, distributed quantum computer 900a. According to an exemplary aspect shown in FIG. 9A, the QPU modules 902 may each contain 1000 compute qubits, which are connected to each other via fiber optic photonic links 904 such that the distributed quantum computer 900a includes 100 modules and 100K qubits. It should be appreciated that the QPU modules 902 can contain more or less than 100 compute qubits in alternative aspects.

In some aspects of the present disclosure, the QPU modules 902 are the individual quantum processors that perform quantum computation. Each module 902 contains qubits and/or is capable of executing quantum operations.

In some aspects of the present disclosure, the photonic links 904 are configured to use photons to transmit quantum information (i.e., qubits) between different QPU modules 902. Photons may be used because they can travel long distances with minimal loss and are less prone to interference.

In some aspects of the present disclosure, the network fabric 906 is the underlying infrastructure that connects the QPU modules 902 via photonic links 904 and coordinates the communication between them. The network fabric 906 may handle tasks like routing quantum information, synchronizing operations, and distributing quantum entanglement across different modules. The network fabric 906 ensures efficient interconnection between QPU modules 902, enabling them to act as a distributed quantum computer 900a.

It should be noted that the number of QPU modules 902 and compute qubits in the quantum computer are for illustrative purposes only and that the quantum computer 900 amay contain any number of QPU modules 902 and compute qubits.

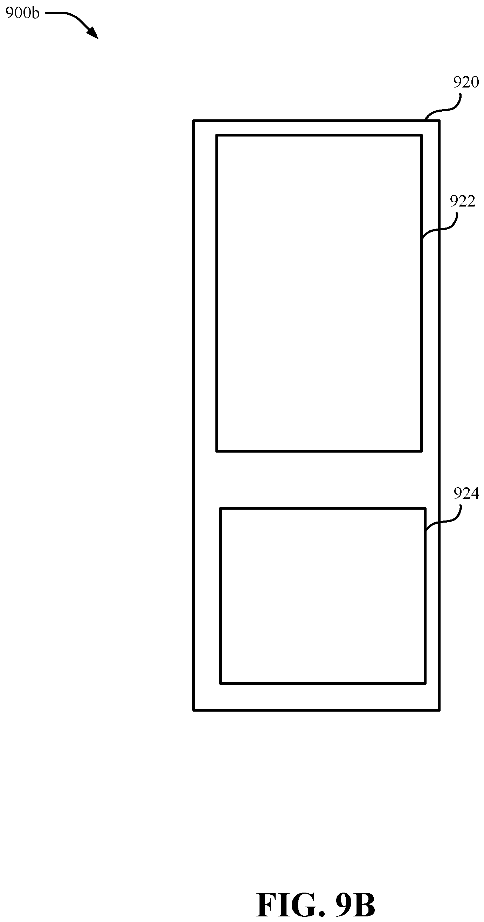

FIG. 9B illustrates an example of a QPU module 920 for implementing remote entanglement according to aspects of the present disclosure. As shown in FIG. 9B, the configuration 900b of the QPU module 920 contains associated support equipment 922 and the QPU 924 itself. In some aspects, the support equipment 922 may include wide range of systems, such as cryogenic systems, lasers, control electronics, measurement tools, vacuum systems, and optical components, all designed to create the highly controlled environments and precise conditions required for qubits to operate reliably. Each quantum technology (e.g., superconducting, trapped-ion, or photonic) has its own unique set of support equipment based on the underlying physics of the qubits being used.

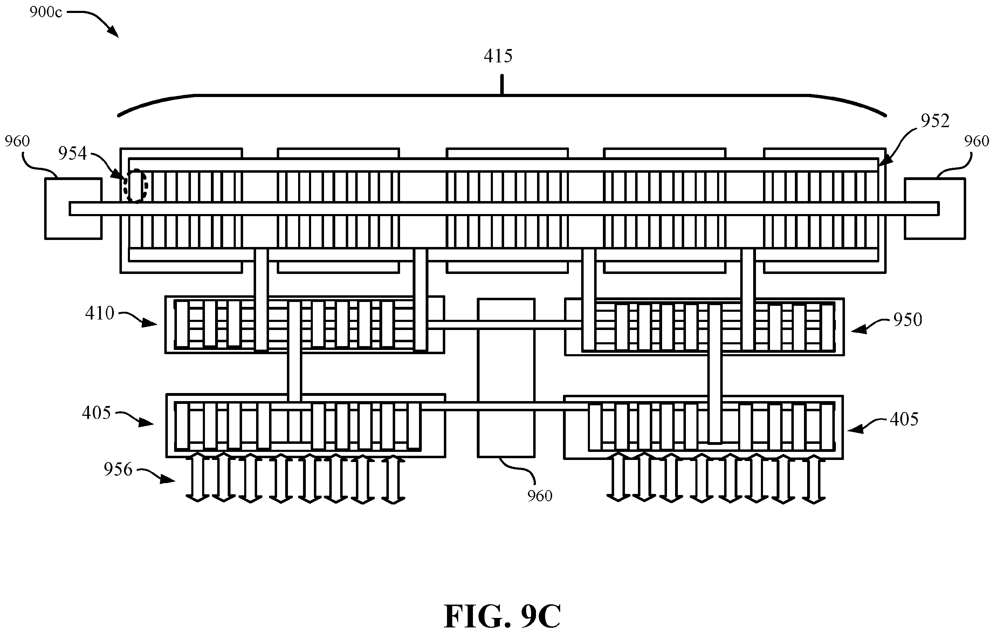

FIG. 9C illustrates an example of a QPU for implementing remote entanglement according to aspects of the present disclosure. It is noted that the configuration shown in FIG. 9C can be implemented using the components described above with respect to FIGs. 2-4. In particular, each QPU 900c can include dedicated interconnect regions (or a communication functional region) 405, a memory functional region 410, a computation functional regions 415, and an entanglement distillation factory 950.

This zone-based architecture shown in FIG. 9C allows for regions of the device to be independently optimized. The interconnect region 405 is configured to host the interconnect ions to create entangled states between pairs of ions residing in two different QPUs. The memory functional region 410 is configured to hold the raw resource states generated by the interconnect ions. Subsequently, the memory ions are used to distill the resource states by combining multiple states into a single higher-fidelity remote entangled state. The computation functional regions 415 performs local, intra-QPU connections. Within the computation functional regions 415, two-qubit gates between remote QPUs are performed by consuming resource states generated by the memory functional region 410. The different regions of the QPU are connected via physical ion transports.

As a non-limiting example, in each QPU 900c, the computational functional region 415 with a 1000 physical compute qubit capacity (as shown in FIG. 9A) is partitioned into five sub-regions. Each of the sub-regions contains 10 operation zones with a 40-qubit chain in each zone according to an exemplary aspect. It should be noted that the hardware architecture is flexible such that the qubit chain may contain 2 to fifty ions in the chain in order to support a wide variety of fault-tolerant quantum error correction (FTQEC) co-design options.

In some aspects of the present disclosure, each of the interconnect regions 405, the memory functional region 410, and/or the computation functional region 415 may be implemented using one or more of the multiple atomic ions (e.g., 106a-d), the QIP system 200, and/or the computer device 300. For example, the computer device 300 may control the QIP system 200 to perform the functions of moving, entangling, and/or transferring one or more of the multiple atomic ions 106a-d, parcels 120a-e, or both ions 106a-d and parcels 120a-e.

In some aspects of the present disclosure, the interconnect regions 405 may contain qubits and/or parcels associated with one or more communication resources, the memory functional region 410 may contain qubits and/or parcels associated with memory resources, and the computation functional region 415 may contain qubits and/or parcels associated with computation resources.

In one aspect of the present disclosure, the memory functional region 410 may provide one or more qubits or parcels to the interconnect regions 405 via the ion transport bus 952 to be entangled with the qubits associated with the communications resources to create memory resources. After the entanglement, the memory resources may be moved to the memory functional region 410 via the ion transport bus 952 to be stored or to be distilled into other memory resources. Any "unused" qubits or parcels (e.g., qubits that were discarded during the distillation process) in the memory functional region 410 may be provided to the communication functional region 405 via the transport bus 952 to await entanglement into memory resources.

In certain aspects, the computation functional region 415 may provide one or more qubits or parcels to the memory functional region 410 via the ion transport bus 952 to be entangled with the qubits associated with the memory resources to create resources similar to the description above. The computational functional region 415 may include an operation zone 954 where quantum operations (such as quantum gates, measurements, or state manipulations) are performed on the qubits. The computation functional region 415 of each QPU may have multiple operation zones, which can each be independently loaded with chains of ions of variable length. Within each operation zone, quantum logic gates are carried out with all-to-all connectivity. The chains are then split, shuttled, and recombined.

The operation zone 954 is the part of the QPU where the actual quantum computation happens. The operation zone 954 is the area where qubits are actively manipulated to execute quantum computations, including the application of gates, qubit interactions, and measurements. Key features of the operation zone 954 may include quantum gate execution, qubit interaction, readout/measurement, and quantum error correction. The operation zone 954 is where quantum gates are applied to the qubits. These gates manipulate the qubit state (e.g., applying a Hadamard gate, CNOT gate, or phase shift). In some aspects, the qubits in the operation zone 954 can interact with each other to perform two-qubit or multi-qubit operations, which are essential for creating entanglement and executing complex quantum algorithms. The operation zone 954 may also include systems for measuring the qubit states at the end of a quantum computation. This converts the quantum information into classical information to be analyzed. In some aspects, some advanced QPUs can use the operation zone 954 to apply quantum error correction protocols, which detect and correct errors in qubit states due to noise or decoherence.

In some aspects of the present disclosure, each of the communication functional region 405, the memory functional region 410, and the computation functional region 415 may have a separate loading zone 960 to initialize or load qubits in a quantum processor. For example, the loading zone 960 may refer to a specific region or stage within a quantum system where qubits are initialized, prepared, or loaded into a quantum processor. In trapped-ion quantum computers, the loading zone 960 may be a region where ions are trapped and initialized as qubits. Specifically, the "loading" here may include preparing the qubit in a known state (e.g., |0〉 or 11)) before using it in a quantum algorithm.

In some aspects, the entanglement distillation factory refers to a system or process designed to take multiple pairs of imperfectly entangled quantum states (qubits) and distill them into fewer, higher-quality entangled pairs. The process is necessary because entanglement is fragile, and noise in the transmission of quantum information can degrade its quality. Distillation purifies these entangled states, making them suitable for high-fidelity quantum communication, computation, or cryptographic protocols. As such, the entanglement distillation factory is central to maintaining reliable long-distance communication.

In some aspects, the photonic interconnect channels 956 are pathways or communication links that use photons to transmit quantum or classification information between different components, devices, or nodes in the network or system.

In quantum systems, photonic interconnect channels 956 carry qubits (quantum bits), where the quantum state of the photon (like polarization, phase, or time-bin encoding) represents information. These channels 956 are used in quantum communication protocols such as quantum key distribution (QKD), quantum teleportation, or entanglement swapping. Photonic interconnect channels 956 are often used to connect different quantum devices or components, such as linking quantum processors, memory units, or sensors in a quantum network. In these cases, they establish photonic links between quantum processing units (QPUs), enabling communication without directly interacting with the qubits in the processors themselves. In some aspects, in integrated quantum photonic systems, photonic interconnect channels 956 are part of on-chip architectures. These channels 956 use waveguides and other optical components to direct photons between different on-chip quantum processors or sensors.

In an exemplary aspect, each QPU 900c can be implemented as part of an ion trap, such as ion trap 270 as shown in FIG. 2 and described above. For example, the ion trap 270 may include the trapped ions used in the interconnect system 400. In some instances, one or more ion traps 270 may be used as one or more of the communication functional region 405, the memory functional region 410, and/or the computation functional region 415. In one implementation, the QPU 900c may include multiple ion traps 270 controlled by the QIP system 200 and/or the computer device 300.

It should be noted that the quantum computer 900a showing 1000 compute qubits, five sub-regions, 10 operation zones, and a 40-qubit chain in each operation zone in the quantum computer are for illustrative purposes only and that the QPU 900c may contain any number of sub-regions, operation zones, and chains in the operation zones.

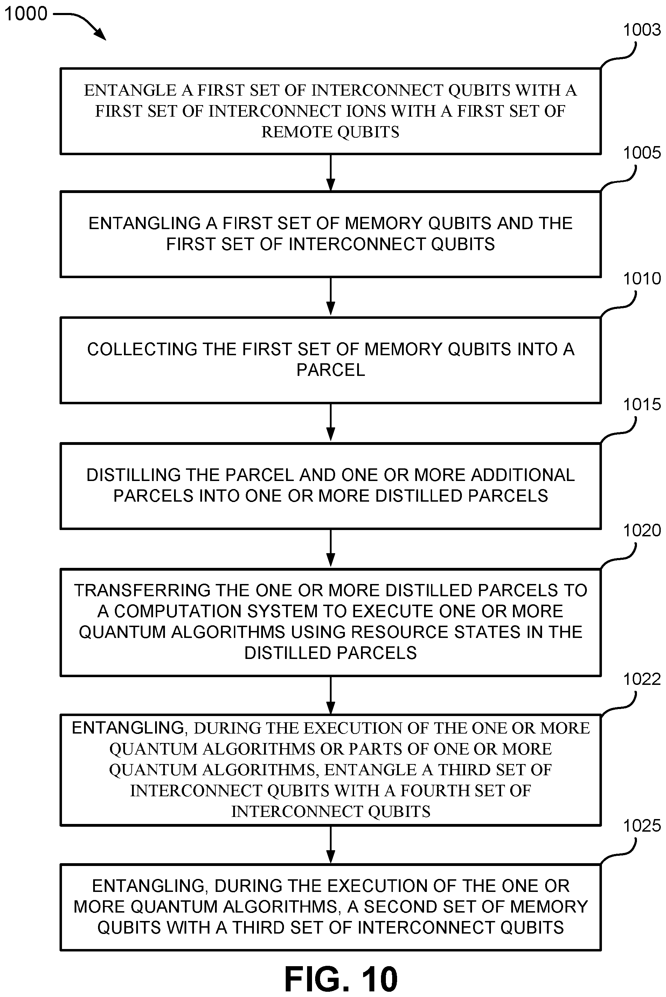

FIG. 10 illustrates a method 1000 for implementing remote entanglement according to aspects of the present disclosure. The method 1000 may be performed by one or more of the QIP system 200, the computer device 300, and/or the interconnect system 400, and/or one or more subcomponents thereof.

At 1003, the method 1000 may entangle a first set of interconnect qubits with a second set of interconnect qubits. Specifically, the QIP system 200, the computer device 300, and/or the interconnect system 400 may herald entanglement, non-deterministically, of local, neighboring, and/or remote interconnection qubits. For example, the interconnect functional region 405 may include light collection 635 light transmission fibers 650, 660, and 670, optical switch 690 and BSAs 680 to configured to, and/or define means for entangling local, neighboring, and/or remote interconnection qubits. In some aspects, the second set of interconnect qubits may be within the same QIP system as the first set of interconnect ions. In other aspects, the second set of interconnect qubits may be on a different QIP system as the first set of interconnect qubits.

At 1005, the method 1000 may entangle a first set of memory qubits and the first set of interconnect qubits. For example, a state dependent force may be applied to the first set of memory qubits and the first set of interconnect qubits configured to, and/or define means for entangling a first set of memory ions and a first set of interconnect ions.

At 1010, the method 1000 may collect the first set of memory ions into a parcel. For example, one or more of the RF rails 505, 510, 515, the RF tracks 511, 512, and/or DC electrodes may be configured to, and/or define means for collecting the first set of memory ions into a parcel.

At 1015, the method 1000 may distill the parcel and one or more additional parcels into one or more distilled parcels. For example, a state dependent force may be applied to the one or more parcels, configured to, and/or define means for entangling a first set of memory ions and a first set of interconnect ions.

At 1020, the method 1000 may transfer the one or more distilled parcels to a computation system to execute one or more quantum algorithms using resource states in the distilled parcels. For example, one or more of the RF rails 505, 510, 515, the RF tracks 511, 512, and/or DC electrodes may be configured to, and/or define means for transferring the one or more distilled parcels to a computation functional region where the computation function region may execute one or more quantum algorithms using resource states in the distilled parcels.

At 1025, the method 1000 may, during the execution of the one or more quantum algorithms or parts of one or more quantum algorithms, entangle a third set of interconnect qubits with a fourth set of interconnect qubits. In some aspects, the fourth set of interconnect qubits may be within the same QIP system as the third set of interconnect ions. In other aspects, the fourth set of interconnect qubits may be on a different QIP system as the third set of interconnect qubits.

At 1030, the method 1000 may entangle, during the execution of the one or more quantum algorithms or parts of one or more quantum algorithms, a second set of memory qubits or parcels with the third set of interconnect qubits or parcels.

The previous description of the disclosure is provided to enable a person skilled in the art to make or use the disclosure. Various modifications to the disclosure will be readily apparent to those skilled in the art, and the common principles defined herein may be applied to other variations without departing from the scope of the disclosure. Furthermore, although elements of the described aspects may be described or claimed in the singular, the plural is contemplated unless limitation to the singular is explicitly stated. Additionally, all or a portion of any aspect may be utilized with all or a portion of any other aspect, unless stated otherwise. Thus, the disclosure is not to be limited to the examples and designs described herein but is to be accorded the widest scope consistent with the principles and novel features disclosed herein.

## Claims

1. A method for operating an interconnect factory, comprising:
entangling a first set of interconnect qubits with a second set of interconnect qubits;
entangling a first set of memory qubits and the first set of interconnect qubits;
collecting the first set of memory qubits into a parcel;
distilling the parcel and one or more additional parcels into one or more distilled parcels;
transferring the one or more distilled parcels to a computation system to execute one or more quantum algorithms using resource states in the distilled parcels;
entangling, during the execution of the one or more quantum algorithms, a third set of interconnect qubits with a fourth set of interconnect qubits; and
entangling, during the execution of the one or more quantum algorithms, a second set of memory qubits with the third set of interconnect qubits.

2. The method of claim 1, further comprising, prior to entangling the first set of memory ions with the first set of interconnect ions:
transferring the first set of memory qubits to one or more conveyors; and
trapping at least one memory qubit of the first set of memory qubits with at least one interconnect ion of the first set of interconnect qubits to enable entangling the at least one memory qubit with the at least one interconnect qubit via state dependent forces.

3. The method of claim 1 or 2, further comprising returning the at least one entangled memory qubit to a memory functional region,
and/or
further comprising measuring states of entangled qubit pairs associated with entangling the first set of memory qubits and the first set of interconnect qubits.

4. The method of any one of the preceding claims, wherein the first set of memory qubits and the first set of interconnect qubits are a same atomic species,
or
wherein the first set of memory qubits and the first set of interconnect qubits are different atomic species.

5. The method of any one of the preceding claims, further comprising, after the execution of the one or more quantum algorithms, splitting at least a portion of the one or more distilled parcels into a plurality of remaining qubits.

6. The method of claim 5, further comprising returning the plurality of remaining ions to the memory functional region for reuse.

7. The method of any one of the preceding claims, further comprising, after distillation of the one or more parcels, splitting at least a portion of the one or more parcels that failed distillation into a plurality of remaining qubits.

8. The method of claim 7, further comprising returning the plurality of remaining ions to the interconnect functional region for reuse.

9. An interconnect factory, comprising:
two or more radio frequency (RF) rails configured to confine one or more interconnect qubits;
a second set of two or more RF rails configured to confine one or more memory qubits;
a third set of two or more RF rails configured to confine one or more computation ions; and
a controller configured to:
cause state dependent forces to entangle a first set of interconnect qubits with a second set of interconnect qubits;
cause state dependent forces to entangle a first set of memory qubits and the first set of interconnect qubits;
cause the second set of RF rails to collect the first set of memory ions into a parcel;
cause state dependent forces to distill the parcel and one or more additional parcels into one or more distilled parcels;
cause the third set of RF rails to transfer the one or more distilled parcels to a computation functional region to execute one or more quantum algorithms using resource states in the distilled parcels;
cause heralded entanglement of a third set of interconnect qubits with a fourth set of interconnect qubits; and
cause spin dependent forces to entangle, during the execution of the one or more quantum algorithms, a second set of memory qubits with the third set of interconnect ions.

10. The interconnect factory of claim 9, wherein the controller is further configured to, prior to entangling the first set of memory ions with the first set of interconnect ions:
transfer the first set of memory qubits to one or more conveyors; and
trap at least one memory qubit of the first set of memory qubits with at least one interconnect ion of the first set of interconnect qubits to enable entangling the at least one memory qubit with the at least one interconnect qubit via state dependent forces.

11. The interconnect factory of claim 10, wherein the controller is further configured to return the at least one entangled memory qubit to a memory functional region.

12. The interconnect factory of any one of the preceding claims 9 to 11, wherein the first set of memory qubits and the first set of interconnect qubits are a same atomic species,
or
wherein the first set of memory qubits and the first set of interconnect qubits are different atomic species.

13. The interconnect factory of any one of the preceding claims 9 to 12 , wherein the controller is further configured to, after the execution of the one or more quantum algorithms, split at least a portion of the one or more distilled parcels into a plurality of remaining qubits.

14. The interconnect factory of claim 13, wherein the controller is further configured to return the plurality of remaining ions to the memory functional region for reuse,
and/or
wherein the controller is further configured to, after distillation of the one or more parcels, split at least a portion of the one or more parcels that failed distillation into a plurality of remaining qubits, wherein optionally the controller is further configured to return the plurality of remaining ions to the interconnect functional region for reuse.

15. A quantum processing unit, comprising:
a plurality of computational functional regions connected to each other using an ion transport bus and configured to perform computation using memory states, wherein each computational functional region comprises at least a plurality of operation zones with a multiple-qubit chain in each operation zone;
a memory functional region connected to the plurality of computational functional regions via the ion transport bus and configured to provide qubits or parcels associated with distilled memory resource states to each computational function region;
an interconnect region connected to the memory functional region via the ion transport bus and configured to generate resource states; and
an entanglement distillation factory connected to the plurality of computational functional regions via the ion transport bus and configured to obtain pairs of entangled qubits and distill them into fewer entangled pairs.
